Europäisches Patentamt

European Patent Office

Office européen des brevets

(11) Publication number: **0 009 939**
**A1**

## EUROPEAN PATENT APPLICATION

(21) Application number: **79302033.0**

(22) Date of filing: **28.09.79**

(51) Int. Cl.³: **H 04 L 7/02**

(30) Priority: **02.10.78 US 947673**

(43) Date of publication of application:
**16.04.80 Bulletin 80/8**

(84) Designated Contracting States:
**DE FR GB IT**

(71) Applicant: SPERRY RAND CORPORATION
1290, Avenue of the Americas
New York N.Y. 10019(US)

(72) Inventor: Moulton, Robert Kirk
731A North Wales Road
North Wales, Pennsylvania 19454(US)

(72) Inventor: Thompson, John Warne
2944 Banner Road
Willow Grove, Pennsylvania 19090(US)

(74) Representative: Michaels, Peter Albert
SPERRY UNIVAC Patent & Licensing Services M.S. S2
W1 SPERRY UNIVAC CENTRE
London NW10 8LS(GB)

(54) **Phase-locked loops.**

(57) A phase-locked loop has a pulse forming circuit (11, 12) connected to one input of an exclusive OR phase detector (13). The pulse forming circuit (11, 12) produces fixed width output pulses for all transitions in its input signal. Variable width and frequency pulses appearing as error signals at the output of the phase detector (13) are processed in an amplifier filter (15) to produce a control signal which is proportional to the average voltage of the error signal, and which controls the variable frequency oscillator in a conventional manner.

Using the pulse former (11, 12) allows operation of the high gain exclusive OR phase detector (13) in applications, such as data recovery from magnetic media, where the synchronising signals appear at intervals corresponding to sub-harmonics of the clocking frequency.

The pulse forming circuit (11, 12) may comprise a further exclusive OR circuit (12) receiving incoming signals directly and via a delay line (11).

**Fig.1.**

-1-

## Phase-locked Loops

This invention relates to phase-locked loops.

A phase-locked loop essentially comprises a variable frequency oscillator and a feedback arrangement which enables the output of the variable frequency oscillator to maintain a predetermined phase and frequency relationship with an incoming signal. The variable frequency oscillator is controlled through an error signal obtained by comparing incoming signals in a phase detector with the output of the variable frequency oscillator, or signals derived from them. Phase-locked loops are widely employed in demodulation, frequency synchronisation and synthesis, and other applications.

Many forms of data coding currently in use, e.g. to record data on magnetic media, involve the representation of different data values by the presence or absence respectively of a transition, or pulse, depending on the code, at a given instant within the data sequence. Also, these codes do not normally contain separate clocking pulses which consequently have to be generated by the data recovery circuit from the timing information contained in the data sequence itself. A phase-locked loop designed to generate the clocking signals must operate in a harmonic mode to maintain lock in response to transitions or pulses which occur more or less randomly at intervals corresponding to various sub-harmonics of the clocking frequency. In contrast, the requirement that the phase-locked loop initially achieves a rapid lock onto the correct clocking frequency, usually in response to a preamble preceding the data sequence and consisting, for instance, of a series of evenly spaced pulses or transitions, indicates the need for a non-harmonic phase-locked loop.

To resolve the conflicting demands of rapid initial locking and subsequent harmonic operation, it is proposed in U.S. patent 4 050 576 to switch operation of the phase-locked loop from a non-harmonic mode to a harmonic mode at the end of the preamble. To this end the error signal controlling the variable frequency oscillator is derived by two different routes, a switching arrangement being provided which effects the changeover in control from one route to the other. Obvious disadvantages of this design are its complexity and the duplication of some of the components.

In a different connection, a phase-locked loop which, additionally to a conventional phase detector, includes an auxiliary exclusive OR phase detector, is known from "Elektronik", 1973, Heft 8. The exclusive OR phase detector provides the fine turning of a square wave generator by comparing the output of the variable frequency oscillator with a fixed frequency, periodic output signal supplied from a quartz oscillator.

The present invention is concerned with providing a phase-locked loop which is capable of quickly locking on to the correct clocking frequency of an incoming signal in response to a preamble, and of maintaining lock on that frequency even in response to signals at various sub-harmonics of the clocking frequency. The invention provides for a phase-locked loop in which a phase detector is preceded by a pulse forming circuit which provides a pulse train containing pulses at transitions of an input signal thereto. The phase comparator then compares this pulse train with a signal derived from the variable frequency oscillator.

A phase-locked loop in accordance with the present invention has several advantages over prior art circuits.

Firstly, it can be applied to a large variety of logic families and/or to most existing serial data code techniques such as FM, PM, 3PM, or NRZI, and others.

Secondly, it is made up of only a comparatively small number of components.

Furthermore, the characteristics of the loop are considerably improved by allowing the use of a high gain phase detector.

Sensitivity to the temporary loss of input data is also low, for in the absence of the data input the error signal will tend toward null. Moreover, the detector does not produce false error signals when there are missing data transitions.

The present invention shall now be described further by way of example and with reference to the accompanying drawings, of which:-

Figure 1 shows a partly schematic circuit diagram of a phase-locked loop according to the present invention, and

Figure 2 shows a set of waveforms appearing at various points of the phase-locked loop of Figure 1.

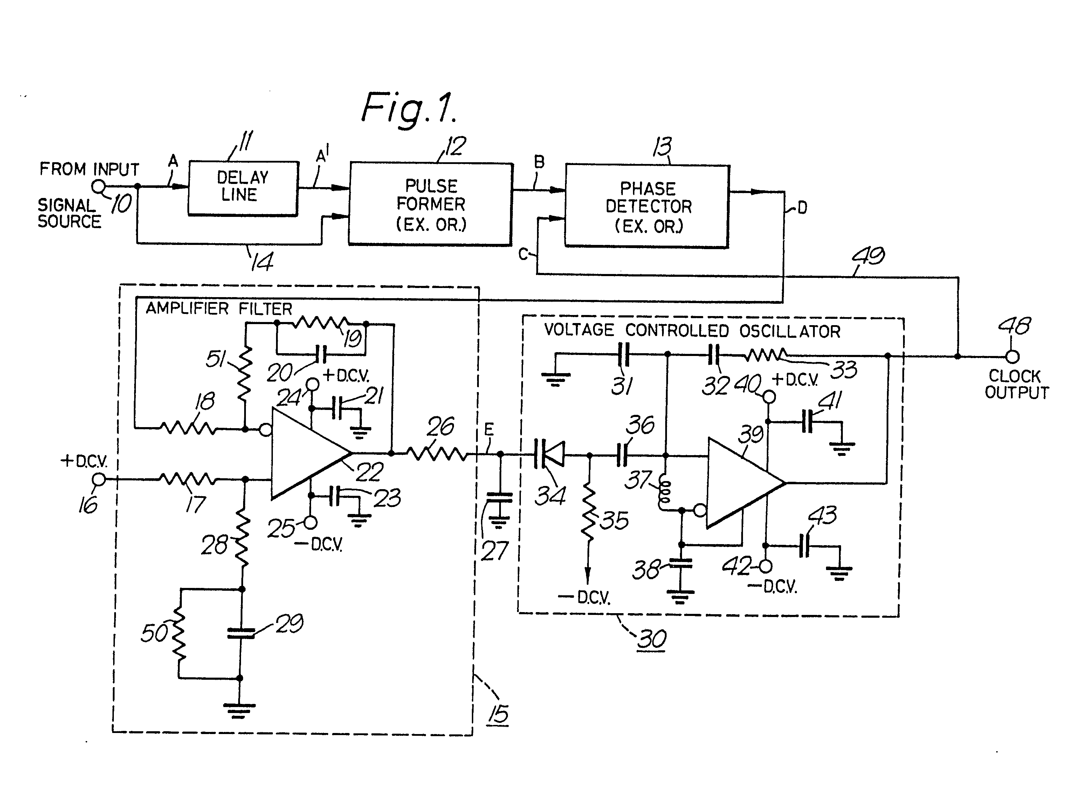

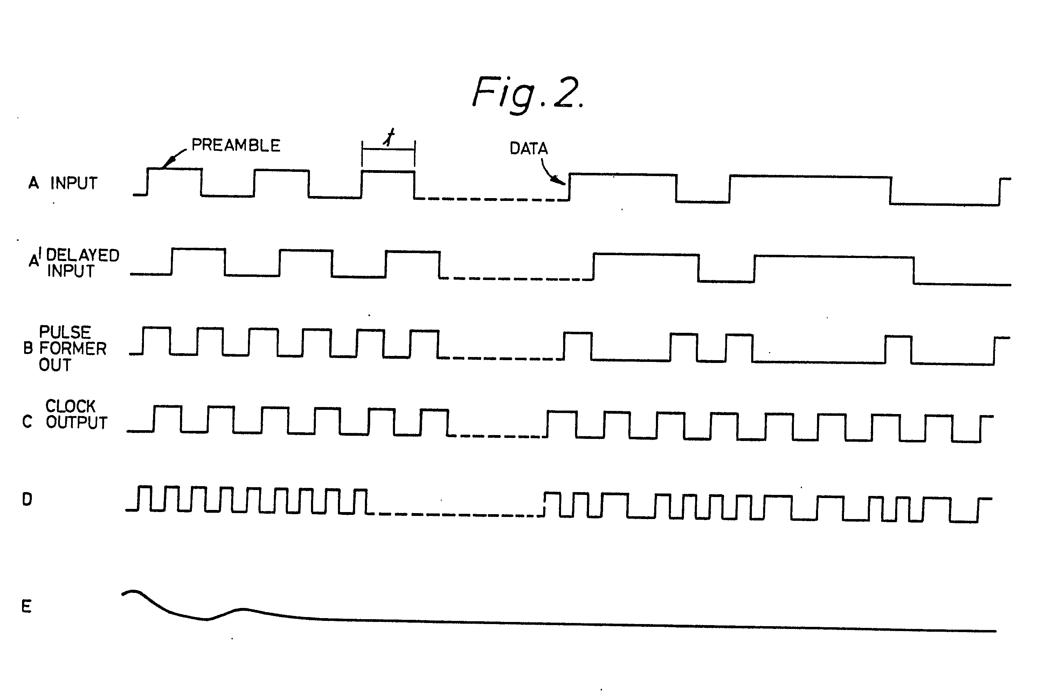

Referring to Figure 1, a source of input signals such as, for instance, the pulse train shown at A of Figure 2, is applied to input terminal 10 which is directly connected to the input of a delay line 11. Delay line 11 is chosen to introduce a delay of approximately one-half the period of clock pulses C, for example 20 ns., into signal A which may have a repetition rate, for example, of 12.5 Mhz. This delayed signal (A') is applied to one input of a pulse-forming exclusive OR circuit 12. To the other input of the the latter, undelayed input signals from the input terminal 10 are applied, whereupon the exclusive OR circuit 12 produces an output signal having a form as shown in B of Figure 2. This output signal will have half the width of the pulses shown at A of Figure 2 (left side).

The output of pulse former 12 is applied to one input of a second exclusive OR circuit 13 which functions as a phase detector for the phase-locked loop. To the other input of detector 13 the output pulses C of a voltage-controlled oscillator shown within the broken line rectangle 30 are fed back via line 49. The output pulses from the controlled oscillator 30 are the same as the output pulses at the clock output terminal 48.

The output of the phase detector 13 is fed to an amplifier-filter circuit shown within the broken line rectangle 15. Circuit 15 includes a filter resistor 18 coupled to an inverting input of the amplifier 22. The other input of operational amplifier 22 is coupled through resistor 17 to a source of a positive DC voltage at the terminal 16. It is also connected to a damping resistor 28 in series with an AC balancing capacitor 29 which is in parallel with a feedback resistor 50 which has one end in common with the capacitor 29, the other end being grounded. The inverting input to the amplifier 22 is also connected through a damping resistor 51 to a parallel RC circuit 19, 20, the other end of the shunt circuit being connected to the output of amplifier 22. Resistor 51 and 18 help to determine the AC (high frequency) gain of the amplifier 22. Resistor 19 is used to limit the DC gain of operational amplifier 22. Capacitor 20 provides a filter time constant for the main loop. Power supply bypass capacitors 21 and 23 are respectively connected between terminals 24 and 25 and ground, the terminals also being connected to the amplifier 22 as shown.

A buffer resistor 26 is also connected between the output of amplifier 22 and, with filter capacitor 27 (which is also coupled to a variable capacitance diode 34) provides additional filtering of the control voltage E.

Diode 34 is part of the voltage-controlled oscillator shown within the broken line rectangle 30. The diode 34 is coupled by capacitor 36 to one input of an amplifier 39. Coupled between the inverting and non-inverting inputs of amplifier 39 is a coil 37 used to tune the oscillator 30. A voltage-bias resistor 35 has one terminal interposed between the variable capacitance diode 34 and capacitor 36 and its other terminal connected to a source of a negative DC voltage. Resistor 35 provides back bias for the variable capacitance diode 34. The inverting input to amplifier 39 is also bypassed through a filter capacitor 38 to ground. The series arrangement of capacitors 31, 32 and resistor 33 is connected between the output of the amplifier 39 and ground, the junction of capacitors 31 and 32 also being connected to the non-inverting input of the amplifier 39. This series arrangement controls the frequency response (range) of oscillator 30 and provides the feedback path necessary for oscillation. Power supply bypass capacitors 41 and 43 are respectively coupled between terminals 40, 42 and ground. The output of amplifier 39 (waveform C) is coupled to an output terminal 48 as well as being fed back to one of the inputs of the exclusive OR phase detector.

The present invention has many different applications, one of which is the demodulation of magnetically-recorded digital signals in computers. These signals are run-bounded, the period between signal pulses being always an integral multiple of the clock period, so that the data components are subharmonics of the clock frequency. These signals are also self-clocking so that the demodulation system requires a clock signal to be recovered. In memory systems employing discs, it is important that the phase-locked loop acquire fast, reliable, lock-on, at the beginning of a track. In order to allow time for the phase-locked loop to stabilize, it is usual to provide a preamble of uniformly spaced (constant frequency) pulses. In Figures 1 and 2, input signals A, in the form of pulses, are applied to terminal 10 which is connected to the input of the delay line 11. The preamble pulses are shown on the left, and the data pulses toward the right of line A of Figure 2. In the illustrated system, the presence or absence of a transition in the input data signals determines whether there is a 1 or 0 being received.

In order to produce a pulse for every transition of the received pulse train, the input signal is delayed by approximately twenty nanoseconds thereby producing the waveform A'. When these two signals are applied to an exclusive OR pulse-forming circuit 12, they produce an output wave B wherein there is a pulse for every transition of the input signal A. The constant width of the positive pulses B is one-half the period of the clock pulses C. This enables the demodulator to determine when each transition is supposed to be.   If this were not possible, the loop would no longer be in lock.

The pulse train B is applied to one input of a phase detector which is a second exclusive OR circuit 13.  To the other input of the phase detector the pulse output (waveform C) of a voltage-controlled oscillator 30 is applied via line 49.

The second exclusive OR phase detecting circuit 13 produces an output wave D consisting of pulses of variable width and frequency which occur even in the absence of pulses in pulse train B.  The pulses D are amplified and filtered in the circuit shown in rectangle 15 and then applied at point E to the voltage-controlled oscillator shown within rectangle 30. The smoothed, filtered signal E is shown in Figure 2.  It should be noticed that its average DC value will be close to +DCV at terminal 16 when the loop is in lock.

The present exclusive OR detector provides improved loop characteristics because it will produce twice the gain of other conventional detectors and thus provide more immunity to noise.  Also, as compared with other available phase detectors, it has considerably fewer components and therefore less likelihood of malfunction.

For purposes of maintaining loop stability, it is desirable to have the input signal contain as many transitions (corresponding to data 1's) as possible;  if the input signal has an abundance of 0's, there is more tendency for the loop to lose lock.  The present system, in the absence of a data signal, will tend half of the time to go high, half of the time to go low, so that the output of the detector 13 tends toward null.  In contrast, other available detectors in the absence of a data signal drift completely to one side of the nominal centre line, i.e., either high or low.

It is also to be noted that the phase detector 13 does not produce false error signals in the absence of transitions (1's) in the incoming data signal A.

The present system has a typical gain, when employing component values as listed below, around 2 volts per radian. Another known phase-locked loop, employing detection by differential AND and NAND gates, has a gain of about half of the present system. Still other loops using MC4044's or MC12040's have gains in the 0.12-0.16 volt per radian range causing severe noise-induced jitter problems.

MC4044's, which are non-harmonic phase detectors, have been used in the past to lock on to the preamble, which is a single frequency signal, compared to the data signals which are multiple harmonics. When so used, before the data train could be started, another phase detector would have to be connected in, otherwise the MC4044 would cause the loop to go out of lock. If a non-harmonic phase detector such as the MC4044 is fed data (which is equivalent to preamble with absence of some transitions) it will produce false error signals. This will produce a false control signal to the voltage controlled oscillator and eventually cause loss of phase and frequency lock of the phase-locked loop.

An exclusive OR phase detector without a pulse former would also cause the phase-locked loop to go out of lock during data because it can only lock on odd harmonic data patterns.

A successful embodiment of the present invention has been constructed with the various components of the circuit having the following values and characteristics:

| | | |
|---|---|---|
| 11 | - | Univac 491578-00 delay line |
| 12 | - | 74S86 (Standard TTL 74 Series) |
| 13 | - | 74S86 (Standard TTL 74 Series) |
| 16 | - | +1.3V |
| 17 | - | 2K ohms |
| 18 | - | 2K ohms |
| 19 | - | 62K ohms |
| 20 | - | 0.1 MFD |
| 21 | - | 0.1 MFD |
| 24 | - | +5V |
| 22 | - | LM318 |
| 23 | - | 0.1 MFD |
| 25 | - | -5.2V |
| 26 | - | 51 ohms |
| 27 | - | 1000 pf |
| 28 | - | 400 ohms |
| 29 | - | 0.1 MFD |
| 31 | - | 68 pf |
| 32 | - | 15 pf |
| 33 | - | 200 ohms |
| 34 | - | MV840 (Univac 289956B-06) |
| 35 | - | 20K ohms |
| 36 | - | 470 pf |
| 37 | - | 0.22 microhenries |
| 38 | - | 0.1 MFD |
| 39 | - | MC10125 |
| 40 | - | +5V |
| 41 | - | 0.1 MFD |
| 42 | - | -5.2V |
| 43 | - | 0.1 MFD |
| 44 | - | 0.1 MFD |
| 45 | - | MC10125 |
| 46 | - | MC10125 |
| 47 | - | 510 ohms |
| 50 | - | 62K ohms |
| 51 | - | 400 ohms |

-1-

CLAIMS

1.      A phase-locked loop including a variable frequency oscillator (30), a phase detector (13) arranged to compare the timing of pulses of a first pulse train with the timing of pulses derived from the variable frequency oscillator (30) and to produce an appropriate error signal, and means (15) for obtaining from the error signal a control signal for the variable frequency oscillator, characterised in that the phase detector (13) is an exclusive OR phase detector, and is preceded by a pulse forming circuit (11, 12) which provides said pulses of the first pulse train in response to all transitions of an input signal applied thereto.

2.      A phase-locked loop as claimed in claim 1, characterised in that the pulse forming circuit (11, 12) comprises signal delay means (11) and an exclusive OR circuit (12), the input signal being applied to one input of the exclusive OR circuit (12) and via the delay means (11) to another input thereof.

3.      A phase-locked loop as claimed in claim 2, characterised in that the signal delay means is a delay line (11) introducing a delay of one half of the nominal period of the variable frequency oscillator (30) into the input signal received at said other input of the exclusive OR circuit (12).

4.      A phase-locked loop as claimed in any preceding claim, characterised in that the variable frequency oscillator (30) is a tuned voltage-controlled oscillator the control voltage of which is obtained through a filtering and amplifying circuit (15) from the average voltage level of the error signal produced by the phase detector (13).

**Fig.1.**

FROM INPUT SIGNAL SOURCE 10

DELAY LINE 11

PULSE FORMER (EX. OR.) 12

PHASE DETECTOR (EX. OR.) 13

AMPLIFIER FILTER

VOLTAGE CONTROLLED OSCILLATOR

CLOCK OUTPUT 48

1/2

009939

# Fig.2.

A INPUT

PREAMBLE

$t$

DATA

A¹ DELAYED INPUT

PULSE
B FORMER
OUT

CLOCK
C OUTPUT

D

E

2/2

0009939

| | DOCUMENTS CONSIDERED TO BE RELEVANT | | CLASSIFICATION OF THE APPLICATION (Int Cl. ¹) |
|---|---|---|---|
| Category | Citation of document with indication, where appropriate, of relevant passages | Relevant to claim | |
| X | THE MARCONI REVIEW, vol. 37, no. 193, second quarter 1974, pages 93-108 Great Baddow L.J. HARRISSON: "A High Speed Re-generator for Digital Signals" * Figures 1,8 * | 1-4 | H 04 L 7/02 |
| X | FR - A - 2 182 632 (C.N.E.S.) * Page 2, lines 2-7; page 4, lines 17-26; page 5, lines 2-11; figures 1,4 * | 1-4 | |
| | US - A - 3 992 581 (DAVIS) * Figure 1 * | 1 | **TECHNICAL FIELDS SEARCHED (Int.Cl. ³)** <br><br> H 04 L 7/02 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-01-1980 | GEISLER |

EPO Form 1503.1  06.78